# EUROPEAN PATENT SPECIFICATION

(11) **EP 1 167 847 B1**
(45) Date of publication and mention of the grant of the patent: **15.11.2006**
(21) Application number: 01115926.6
(22) Date of filing: 29.06.2001
(51) Int. Cl.: F16K 31/06, F16K 3/34, F16K 3/24

(54) **Flow control valve**
Durchflusssteuerventil
Vanne de commande de débit

(30) Priority: 30.06.2000 JP 2000198181
(43) Date of publication of application: 02.01.2002
(73) Proprietor: JTEKT CORPORATION, Chuo-ku, Osaka (JP)
(72) Inventor: Suto, Satoshi, c/oToyoda Koki Kabushiki Kaisha, Kariya-shi, Aichi-ken (JP); Okuda, Ikuo, c/oToyoda Koki Kabushiki Kaisha, Kariya-shi, Aichi-ken (JP); Suzuki, Masaru, c/oToyoda Koki Kabushiki Kaisha, Kariya-shi, Aichi-ken (JP)
(74) Representative: TBK-Patent

(56) References cited:
- EP-A- 0 472 101
- EP-A- 0 728 654
- US-A- 5 832 949
- PATENT ABSTRACTS OF JAPAN vol. 1999, no. 09, 30 July 1999 (1999-07-30) & JP 11 094120 A (TOYODA MACH WORKS LTD), 9 April 1999 (1999-04-09)

## Description

### BACKGROUND OF THE INVENTION

### Field of the Invention

The present invention relates to a flow control valve built into a vehicle-speed-responsive hydraulic power steering apparatus of a valve-sensitivity-variable type and adapted to control the flow rate of a hydraulic circuit in proportion to vehicle speed, and more particularly to an improvement in the configuration of a throttle passage that varies with reciprocation of a valve element.

### Description of the Related Art

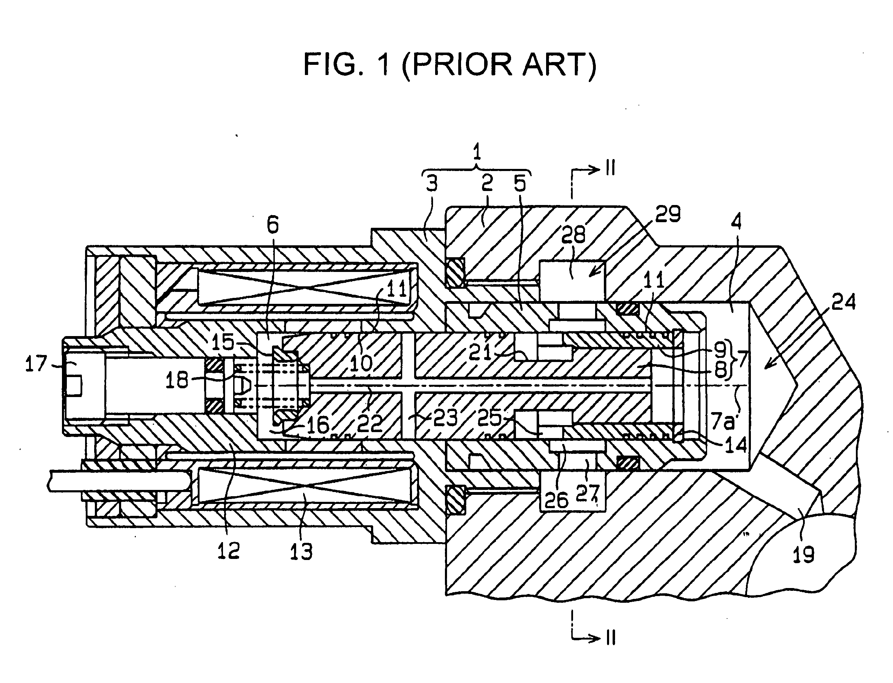

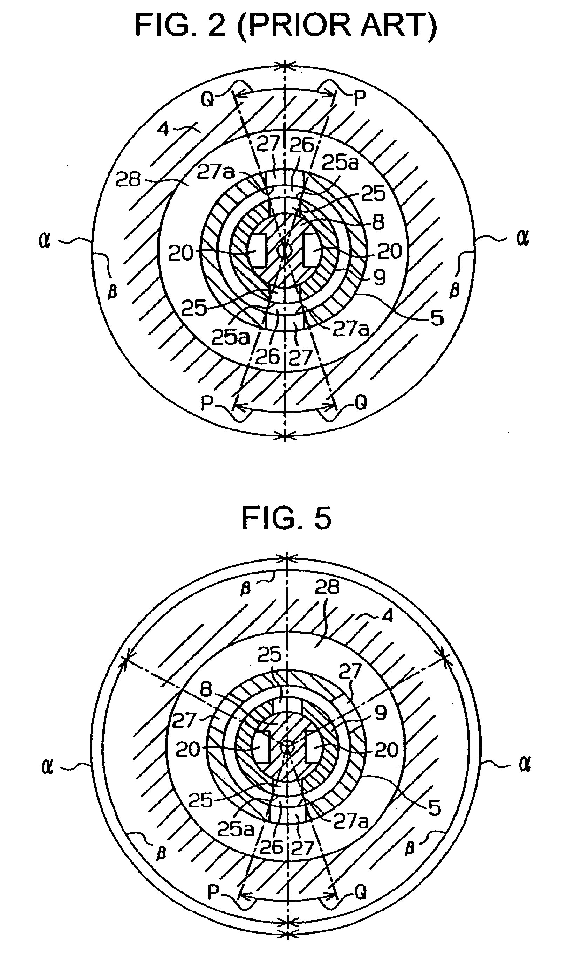

FIGS. 1 and 2 show a conventional electromagnetic hydraulic flow control valve. A detailed description thereof is omitted here, because the conventional electromagnetic hydraulic flow control valve has the same basic structure as that of an electromagnetic hydraulic flow control valve of the present invention which is described in the subsection entitled "Structure of electromagnetic hydraulic flow control valve" of the "DESCRIPTION OF THE PREFERRED EMBODIMENT" section.

Document JP 11 094120 A discloses a solenoid flow control valve, wherein a spool is engaged axially slidingly with an inner hole of a valve body having first and second ports, an intermediate chamber and a balance chamber are formed between the inner peripheral surface and the back part of the inner hole, and variable restriction varying its aperture according to displacement of the spool is formed between the intermediate chamber and the second port. In the spool, a path hole which penetrates in the axial line to communicate the second port with the balance chamber, a transverse hole which is branched from the path hole and opens to the intermediate chamber, and an outer peripheral passage communicating the first port with the intermediate chamber in parallel with the path hole and the transverse hole are formed. By selecting flow resistance and passage area of the path hole, the transverse hole, and the outer peripheral passage so that they satisfy a given condition, axial force added to the spool by pressures loss of working fluid flowing through the path hole becomes zero.

EP 0 728 654 A discloses a valve for controlling flow of hydraulic fluid. The valve has first and second valve members which have a plurality of lands and grooves. The valve members are relatively movable from a neutral position to a displaced position in which surface segments of respective pairs of lands overlap to form flow gaps for restricting flow of fluid between respective pairs of grooves. At least one of the flow gaps is divergent by having a cross-sectional flow area which increases along a direction of fluid flow and at least one of the flow gaps is convergent by having a cross-sectional flow area which decreases along a direction of fluid flow. The flow gaps have minimum cross-sectional flow areas defined by the surface segments. The flow gaps are sized such that the minimum cross-sectional flow area of the convergent flow gap is larger than the minimum cross-sectional flow area of the divergent flow gap for suppressing valve noise.

EP 0 472 101 A discloses a hydraulic pressure control valve, wherein a valve body having six oil grooves on its outer periphery at specified intervals is rotatably disposed in a cylindrical casing having six oil grooves on its inner periphery at specified intervals, and throttles are constructed on both sides of the respective oil grooves, thereby two throttling units each of which consisting of six throttles, are constructed and respective two throttles facing to each other in the radial direction among respective six throttles constructing respective throttling units have regions in which throttle areas do not substantially change until the relative angular displacement between the valve body and the casing reaches a predetermined magnitude.

US 5 832 949 A discloses a control valve, wherein a restrictor can be formed simply in an oil passage for introducing pressure oil on the downstream side of an orifice into a pressure chamber. The control valve is generally constructed such that pressure oil on the downstream side of the orifice is introduced into the pressure chamber through the oil path and a spool is moved by an action of a pressure difference on the opposite sides of the orifice, whereas an excessive flow mount of oil escapes to a tank port. A groove is formed along an insertion hole of a connector or on a tubular portion of an orifice member which overlaps with the insertion hole. Such groove may otherwise be formed both along the insertion hole and on the tubular portion. When the orifice member is inserted into a connector, a restrictor which makes part of the oil path is formed form the groove simultaneously.

The problem with said prior art valves is that noise generated due to the cavitation phenomenon cannot be ignored.

### SUMMARY OF THE INVENTION

In view of the foregoing, an object of the present invention is to provide a flow control valve which has an improved throttle passage that varies with reciprocation of a valve element and which thus mitigates noise generated due to the cavitation phenomenon.

In order to achieve the above object, the present invention provides a flow control valve, comprising a valve body having a substantially cylindrical bore; and a substantially cylindrical valve element received within the cylindrical bore of the valve body to be reciprocatable, the valve body and the valve element defining first and second chambers separated by the valve element. The valve body has a circumferential groove surrounding the valve element, and a plurality of radially-extending passage holes communicating with the circumferential groove. The circumferential groove and the passage holes form portions of the second chamber. The valve element has a plurality of radially-extending throttle holes for establishing communication between the circumferential groove and the first chamber. The flow rate of operation oil flowing between the first chamber and the second chamber via the throttle holes is changed through axial movement of the valve element. The passage holes and the throttle holes are circumferentially arranged in such a manner that even when one of the passage holes circumferentially overlaps one of the throttle holes, the remaining passage hole or holes do not circumferentially overlap the remaining throttle hole or holes.

During assembly, one of the throttle holes and one of the passage holes may face each other, with the result that noise is generated due to the cavitation phenomenon. However, the remaining throttle hole(s) and the remaining passage hole(s) do not face each other, so that operation oil having passed through the remaining throttle hole(s) first hits the bottom of the inner circumferential groove and reaches the remaining passage hole(s) against a relatively high flow resistance. Therefore, the velocity of the operation oil jetted from the remaining throttle hole(s) decreases, so that local pressure reduction is less likely to occur within the inner circumferential groove and the remaining passage hole(s). Accordingly, generation of noise due to the cavitation phenomenon can be suppressed as compared with the case of a conventional flow control valve.

Preferably, the throttle holes are circumferentially arranged at first angular intervals which are substantially equal to one another; the passage holes are circumferentially arranged at second angular intervals which are substantially equal to one another; and the number of the throttle holes is greater or less than the number of the passage holes by one.

Alternatively, the throttle holes are circumferentially arranged at first angular intervals which are substantially equal to one another; the passage holes are circumferentially arranged at second angular intervals which are substantially equal to one another; and the number of the throttle holes and the number of the passage holes are determined so as not to have a common divisor.

In each of these cases, the throttle holes are circumferentially arranged at first angular intervals which are substantially equal to one another; and the passage holes are circumferentially arranged at second angular intervals which are substantially equal to one another. Therefore, pressure balance within the flow control valve can be maintained.

More preferably, two throttle holes are circumferentially arranged at angular intervals of about 180°, and three passage holes are circumferentially arranged at angular intervals of about 120°. In this case, the number of the throttle holes and the number of the passage holes can be minimized so as to simplify the structure of the flow control valve.

Preferably, the flow control valve of the present invention further comprises a solenoid for reciprocating the valve element.

### BRIEF DESCRIPTION OF THE DRAWINGS

Various other objects, features and many of the attendant advantages of the present invention will be readily appreciated as the same becomes better understood by reference to the following detailed description of the preferred embodiment when considered in connection with the accompanying drawings, in which:
FIG. 1 is a cross-sectional view of a conventional electromagnetic hydraulic flow control valve in an opened state;
FIG. 2 is an enlarged cross-sectional view taken along line II-II in FIG 1;
FIG. 3 is a cross-sectional view of an electromagnetic hydraulic flow control valve according to an embodiment of the present invention, showing a state in which the valve is in a closed state;
FIG 4. is a cross-sectional view of the electromagnetic hydraulic flow control valve according to the embodiment of the present invention, showing a state in which the valve is in an opened state; and
FIG 5. is an enlarged cross-sectional view taken along line V-V in FIG. 4.

### DESCRIPTION OF THE PREFERRED EMBODIMENT

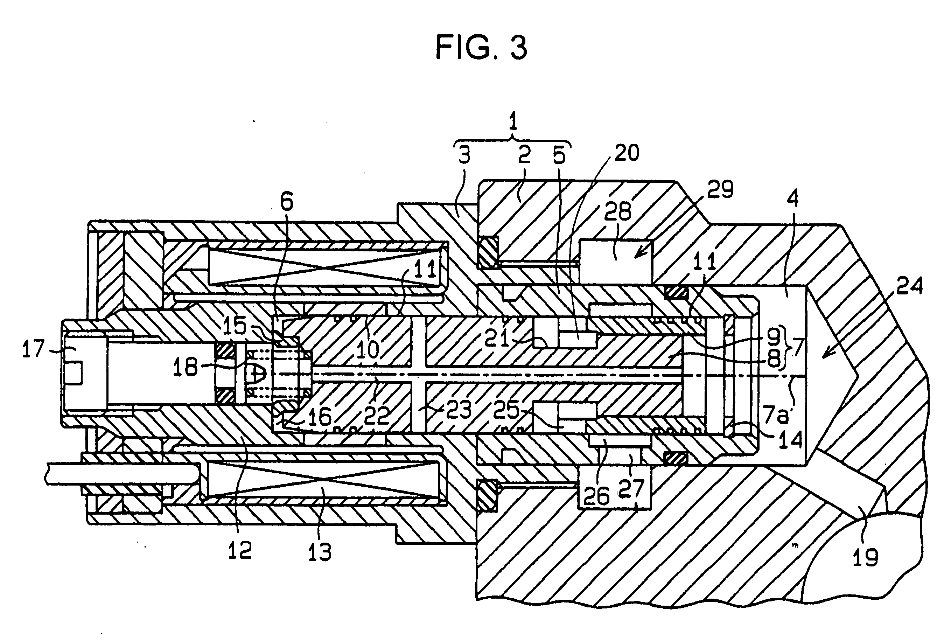

An electromagnetic hydraulic flow control valve according to an embodiment of the present invention will now be described with reference to FIGS. 3 to 5.

### Structure of electromagnetic hydraulic flow control valve:

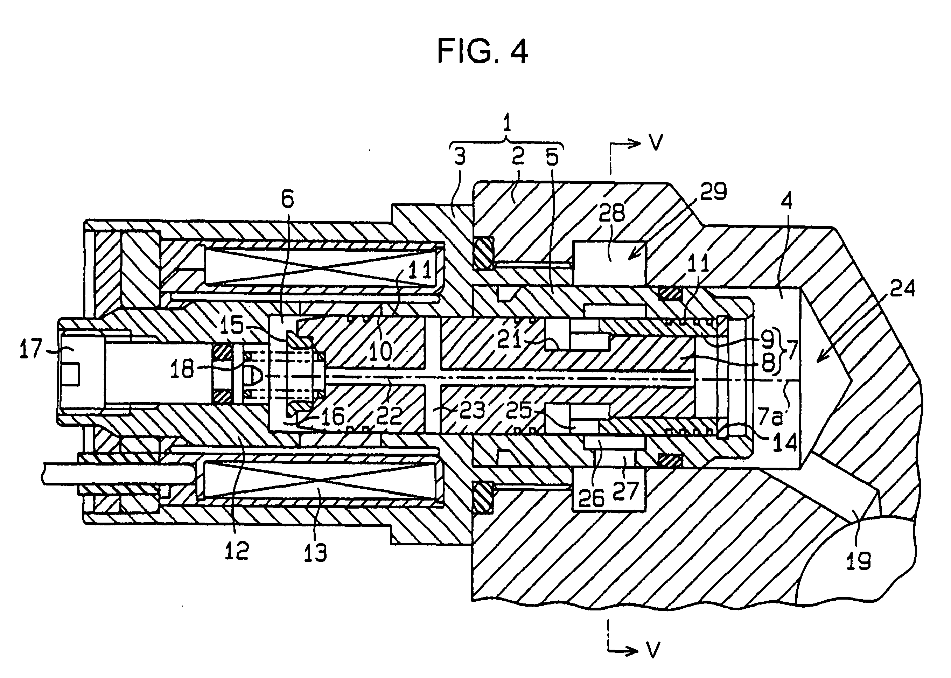

A valve body 1 includes a housing 2, a solenoid case 3 attached to the housing 2, and a plug 5 fitted into an attachment bore 4 formed in the housing 2 and the solenoid case 3. A spool 7 serving as a valve element is received in a slide bore 6 formed in the plug 5 and the solenoid case 3. Reference numeral 7a denotes a centerline of the spool 7. The spool 7 consists of a spool body 8 formed of a magnetic material and serving as a core, and a valve sleeve 9 attached to the spool body 8. In the slide bore 6, an outer sliding surface 10 of the spool body 8 is in sliding contact with an inner sliding surface 11 of the solenoid case 3 and an inner sliding surface 11 of the plug 5. The valve sleeve 9 is fitted onto the outer circumference of a first end portion of the spool body 8 to be located within the plug 5 and is in sliding contact with the inner sliding surface 11 of the plug 5. When a yoke 12 accommodated within the solenoid case 3 is magnetized and demagnetized by a solenoid 13, the spool 7 slidingly reciprocates within the slide bore 6 between a position at which a stopper collar 15 attached to a second end portion of the spool body 8 abuts the bottom surface of the slide bore 6 located within the solenoid case 3 (see FIG 3) and a position at which the valve sleeve 9 abuts a stopper ring 14 fixedly provided within the plug 5 (see FIG 4). A balance chamber 16 is defined within the solenoid case 3 between the bottom surface of the slide bore 6 and the second end portion of the spool body 8. In the balance chamber 16, a balance spring 18 is disposed between an adjustment screw 17 provided at the bottom of the slide bore 6 and the second end portion of the spool body 8. The balance spring 18 urges the spool 7 toward the stopper ring 14 by means of elastic force thereof.

An inflow hole 19 communicating with the attachment bore 4 is formed in the housing 2. The spool body 8 of the spool 7 has spool side grooves 20 and a spool outer circumferential groove 21. The spool side grooves 20 are formed in diametrically opposite circumferential portions of the spool body 8 to extend parallel to the centerline 7a within the valve sleeve 9. The spool outer circumferential groove 21 is formed on the spool body 8 to extend in the circumferential direction over the entire circumference thereof. A longitudinal balance hole 22 is formed in the spool body 8 along the centerline 7a to extend between the space within the valve spool 9 and the balance chamber 16. Further, transverse balance holes 23 are formed in the spool body 8 on opposite sides with respect to the centerline 7a such that the transverse balance holes 23 extend in radial directions perpendicular to the centerline 7a and reach the inner sliding surface 11 of the solenoid case 3. The space within the inflow hole 19, the space within the attachment bore 4, the space within the plug 5, the space within the stopper ring 14, the space within the valve sleeve 9, the spaces within the spool side grooves 20, the space within the spool outer circumferential groove 21, the space within the longitudinal balance hole 22, the spaces within the transverse balance holes 23, and the space within the balance chamber 16 constitute a first chamber 24.

A plurality of throttle holes 25 (which will be described later) are formed in an inner end portion of the valve sleeve 9 of the spool 7 such that the throttle holes 25 are arranged at predetermined angular intervals and communicate with the spool outer circumferential grooves 21 of the spool body 8. A plug inner circumferential groove 26 (which will be described later) is formed on the inner sliding surface 11 of the plug 5 in such a manner that the plug inner circumferential groove 26 is located in the vicinity of the throttle holes 25 and extends in the circumferential direction over the entire circumference of the inner sliding surface 11. The plug inner circumferential groove 26 communicates with the throttle holes 25 of the valve sleeve 9 when the spool 7 moves to the position shown in FIG. 4. A plurality of passage holes 27 (which will be described later) are radially formed in the plug 5 to communicate with the plug inner circumferential groove 26. A housing inner circumferential groove 28 is formed in the housing 2 to extend in the circumferential direction of the plug 5 such that the housing inner circumferential groove 28 completely surrounds the plug 5 and communicates with the passage holes 27. The space within the plug inner circumferential groove 26, the spaces within the passage holes 27, and the space within the housing inner circumferential groove 28 constitute a second chamber 29.

The spool 7 stops at a position at which balance is attained among pressure of operation oil supplied to the first chamber 24, attraction force of the yoke 12 magnetized by the solenoid 13, and elastic force of the balance spring 18. Therefore, the overlap areas between the plug inner circumferential groove 26 of the plug 5 and the throttle holes 25 of the spool valve 9 vary continuously in accordance with current supplied to the solenoid 13. Operation oil flows from the spool outer circumferential groove 21 of the first chamber 24 to the plug inner circumferential groove 26 and the passage holes 27 of the second chamber 29 via the throttle holes 25 and returns to an oil tank, with the flow rate of the operation oil being regulated in accordance with the degrees of opening of the throttle holes 25.

### Consideration of the relationship between the throttle holes 25 and the passage holes 27:

The number A of the throttle holes 25 is 2 (an integer). The throttle holes 25 are arranged at fixed angular intervals α (α = 180°); and an opening end 25a of each throttle hole 25 facing the plug inner circumferential groove 26 extends over a circumferential angular range P.

The number B of the passage holes 27 is 3 (an integer). The passage holes 27 are arranged at equal angular intervals β (β = 120°); and an opening end 27a of each passage hole 27 facing the plug inner circumferential groove 26 extends over a circumferential angular range Q, which is substantially equal to the circumferential angular range P of the throttle holes 25.

The number A (an integer, 2) of the throttle holes 25 is less than the number B (an integer, 3) of the passage holes 27 by one. Alternatively, the number B of the passage holes 27 may be determined to be less than the number A of the throttle holes 25 by one (e.g., the number of the passage holes 27 is 2, and the number of the throttle holes 25 is 3). In any event, the number A of the throttle holes 25 and the number B of the passage holes 27 are determined in such a manner that they do not have a common divisor.

As described above, when the valve sleeve 9 of the spool 7 is built into the plug 5 with an arbitrary angular orientation, the circumferential angular range P of the opening end 25a of one throttle hole 25 may circumferentially overlap the circumferential angular range Q of the opening end 27a of one passage hole 27. Even in such a case, the circumferential angular range P of the opening end 25a of the other throttle hole 25 does not overlap with the circumferential angular range Q of either of the opening ends 27a of the remaining passage holes 27.

The above-described conditions regarding the throttle holes 25 and the passage holes 27 show a typical example. The number A of the throttle holes 25, the number B of the passage holes 27, the angular interval α of the throttle holes 25, the angular interval β of the passage holes 27, the circumferential angular range P of the throttle holes 25, and the circumferential angular range Q of the passage holes 27 may be modified freely, provided that the opening ends 25a of the throttle holes 25 do not overlap with the opening ends 27a of the passage holes 27 at two or more circumferential positions.

Obviously, numerous modifications and variations of the present invention are possible in light of the above teachings. It is therefore to be understood that within the scope of the appended claims, the present invention may be practiced otherwise than as specifically described herein.

A flow control valve includes a valve body having a substantially cylindrical bore, and a substantially cylindrical valve element received within the cylindrical bore of the valve body to be reciprocatable. The valve body and the valve element define first and second chambers separated by the valve element. The valve body has a circumferential groove surrounding the valve element, and a plurality of radially-extending passage holes communicating with the circumferential groove. The circumferential groove and the passage holes form portions of the second chamber. The valve element has a plurality of radially-extending throttle holes for establishing communication between the circumferential groove and the first chamber. The flow rate of operation oil flowing between the first chamber and the second chamber via the throttle holes is changed through axial movement of the valve element. The passage holes and the throttle holes are circumferentially arranged in such a manner that even when one of the passage holes circumferentially overlaps one of the throttle holes, the remaining passage hole or holes do not circumferentially overlap the remaining throttle hole or holes.

## Claims

1. A flow control valve, comprising:
a valve body (1) having a substantially cylindrical bore (4, 6); and
a substantially cylindrical valve element (7) received within the cylindrical bore of the valve body to be reciprocable, the valve body (1) and the valve element (7) defining first and second chambers (24, 29) separated by the valve element (7);
the valve body (1) having a circumferential groove (28) surrounding the valve element (7), and a plurality of radially extending passage holes (27) communicating with the circumferential groove (28), the circumferential groove (28) and the passage holes (27) forming portions of the second chamber (29), the valve element (7) having a plurality of radially extending throttle holes (25) for establishing communication between the circumferential groove (28) and the first chamber (24), and flow rate of operation oil flowing between the first chamber (24) and the second chamber (29) via the throttle holes (25) being changed through axial movement of the valve element (7), **characterized in that**
the passage holes (27) and the throttle holes (25) are circumferentially arranged in such a manner that even when one of the passage holes (27) circumferentially overlaps one of the throttle holes (25), the remaining passage hole or holes (27) do not circumferentially overlap the remaining throttle hole or holes (25).

2. A flow control valve according to claim 1, wherein the throttle holes (25) are circumferentially arranged at first angular intervals which are substantially equal to one another; the passage holes (27) are circumferentially arranged at second angular intervals which are substantially equal to one another; and the number of the throttle holes (25) is greater or less than the number of the passage holes (27) by one.

3. A flow control valve according to claim 1, wherein the throttle holes (25) are circumferentially arranged at first angular intervals which are substantially equal to one another; the passage holes (27) are circumferentially arranged at second angular intervals which are substantially equal to one another; and the number of the throttle holes (25) and the number of the passage holes (27) are determined so as not to have a common divisor.

4. A flow control valve according to claim 1, wherein two throttle holes (25) are circumferentially arranged at angular intervals of about 180°, and three passage holes (27) are circumferentially arranged at angular intervals of about 120°.

5. A flow control valve according to any one of claims 1 to 4, further comprising a solenoid (13) for reciprocating the valve element (7).

## Patentansprüche

1. Strömungsregelventil mit:
einem Ventilkörper (1), der eine im wesentlichen zylindrische Bohrung (4, 6) hat;
einem im wesentlichen zylindrischen Ventilelement (7), das innerhalb der zylindrischen Bohrung des Ventilkörpers aufgenommen ist, um hin und her bewegbar zu sein, wobei der Ventilkörper (1) und das Ventilelement (7) eine erste und zweite Kammer (24, 29) definieren, die durch das Ventilelement (7) getrennt sind;
wobei der Ventilkörper (1) eine Umfangsnut (28), die das Ventilelement (7) umgibt, und eine Vielzahl von sich radial erstreckenden Passagenlöchern (27) hat, die mit der Umfangsnut (28) verbunden sind, wobei die Umfangsnut (28) und die Passagenlöcher (27) Abschnitte der zweiten Kammer (29) ausbilden,
wobei das Ventilelement (7) eine Vielzahl von sich radial erstreckenden Drossellöchern (25) für ein Herstellen einer Verbindung zwischen der Umfangsnut (28) und der ersten Kammer (24) hat, und
wobei eine Strömungsrate von Betriebsöl, das zwischen der ersten Kammer (24) und der zweiten Kammer (29) mittels der Drossellöcher (25) strömt, durch eine Axialbewegung des Ventilelements (7) geändert wird,
**dadurch gekennzeichnet, dass**
die Passagenlöcher (27) und die Drossellöcher (25) umfänglich in solch einer Weise angeordnet sind, dass, sogar wenn eines der Passagenlöcher (27) umfänglich eines der Drossellöcher (25) überlappt, das verbleibende Passagenloch oder die verbleibenden Passagenlöcher (27) das verbleibende Drosselloch oder die verbleibenden Drossellöcher (25) nicht umfänglich überlappt.

2. Strömungsregelventil gemäß Anspruch 1, wobei
die Drossellöcher (25) umfänglich bei ersten Winkelintervallen angeordnet sind, die im Wesentlichen gleich zueinander sind;
die Passagenlöcher (27) umfänglich bei zweiten Winkelintervallen angeordnet sind, die im Wesentlichen gleich zueinander sind; und
die Anzahl der Drossellöcher (25) um eins größer oder geringer ist als die Anzahl der Passagenlöcher (27).

3. Strömungsregelventil gemäß Anspruch 1, wobei
die Drossellöcher (25) umfänglich bei ersten Winkelintervallen angeordnet sind, die im Wesentlichen gleich zueinander sind;
die Passagenlöcher (27) umfänglich bei zweiten Winkelintervallen angeordnet sind, die im Wesentlichen gleich zueinander sind; und
die Anzahl der Drossellöcher (25) und die Anzahl der Passagenlöcher (27) so bestimmt sind, dass sie keinen gemeinsamen Teiler haben.

4. Strömungsegelventil gemäß Anspruch 1, wobei zwei Drossellöcher (25) umfänglich bei Winkelintervallen von ungefähr 180° angeordnet sind, und drei Passagenlöcher (27) umfänglich bei Winkelintervallen von ungefähr 120° angeordnet sind.

5. Strömungsregelventil gemäß einem der Ansprüche 1 bis 4, des weiteren mit einem Solenoid (13) für ein hin- und herbewegen des Ventilelements (7).

## Revendications

1. Soupape de commande d'écoulement, comportant :
un corps de soupape (1) ayant un alésage sensiblement cylindrique (4, 6); et
un élément de soupape sensiblement cylindrique (7) reçu à l'intérieur de l'alésage cylindrique du corps de soupape afin de pouvoir être déplacé en va et vient, le corps de soupape (1) et l'élément de soupape (7) définissant des première et deuxième chambres (24, 29) séparées par l'élément de soupape (7);
le corps de soupape (1) ayant une rainure circonférentielle (28) qui entoure l'élément de soupape (7), et une multiplicité de trous de passage s'étendant radialement (27) qui communiquent avec la rainure circonférentielle (28), la rainure circonférentielle (28) et les trous de passage (27) formant des parties de la deuxième chambre (29), l'élément de soupape (7) ayant une multiplicité de trous d'étranglement s'étendant radialement (25) destinés à établir une communication entre la rainure circonférentielle (28) et la première chambre (24), et le débit de l'huile d'actionnement qui s'écoule entre la première chambre (24) et la deuxième chambre (29) par l'intermédiaire des trous d'étranglement s'étendant radialement (25) étant modifié grâce au mouvement axial de l'élément de soupape (7), **caractérisée en ce que**
les trous de passage (27) et les trous d'étranglement (25) sont disposés de manière circonférentielle de telle sorte que, même lorsque l'un des trous de passage (27) chevauche de manière circonférentielle l'un des trous d'étranglement (25), le trou ou les trous de passage (27) restants ne chevauchent pas de manière circonférentielle le trou ou les trous d'étranglement (25) restants.

2. Soupape de commande d'écoulement selon la revendication 1, dans laquelle les trous d'étranglement (25) sont disposés de manière circonférentielle à des premiers intervalles angulaires qui sont sensiblement égaux l'un à l'autre; les trous de passage (27) sont disposés de manière circonférentielle à des deuxièmes intervalles angulaires qui sont sensiblement égaux l'un à l'autre; et le nombre de trous d'étranglement (25) est supérieur ou inférieur au nombre de trous de passage (27) de un.

3. Soupape de commande d'écoulement selon la revendication 1, dans laquelle les trous d'étranglement (25) sont disposés de manière circonférentielle à des premiers intervalles angulaires qui sont sensiblement égaux l'un à l'autre; les trous de passage (27) sont disposés de manière circonférentielle à des deuxièmes intervalles angulaires qui sont sensiblement égaux l'un à l'autre; et le nombre des trous d'étranglement (25) et le nombre des trous de passage (27) sont déterminés de façon à ne pas avoir un diviseur commun.

4. Soupape de commande d'écoulement selon la revendication 1, dans laquelle deux trous d'étranglement (25) sont disposés de manière circonférentielle à des intervalles angulaires d'environ 180°, et trois trous de passage (27) sont disposés de manière circonférentielle à des intervalles angulaires d'environ 120°.

5. Soupape de commande d'écoulement selon l'une quelconque des revendications 1 à 4, comportant en outre un électroaimant (13) destiné à déplacer en va et vient l'élément de soupape (7).
